# EUROPEAN PATENT SPECIFICATION

(11) **EP 1 511 218 B1**
(45) Date of publication and mention of the grant of the patent: **18.11.2015**
(21) Application number: 03735240.8
(22) Date of filing: 16.05.2003
(51) Int. Cl.: H04L 12/28, H04L 29/08, H04L 29/06, H04W 40/24

(54) **A METHOD TO REALIZE DYNAMIC NETWORKING AND RESOURCE SHARING AMONG EQUIPMENTS**
VERFAHREN ZUR REALISIERUNG EINER DYNAMISCHEN VERNETZUNG UND EINER GEMEINSAMEN NUTZUNG VON BETRIEBSMITTELN ZWISCHEN GERÄTEN
PROCEDE DE RESEAUTAGE ET DE PARTAGE DE RESSOURCES DYNAMIQUE ENTRE EQUIPEMENTS

(30) Priority: 17.05.2002 CN 02117334; 06.09.2002 CN 02129653; 10.09.2002 CN 02130630
(43) Date of publication of application: 02.03.2005
(73) Proprietor: Lenovo (Beijing) Limited, Haidan District, Beijing 100085 (CN)
(72) Inventor: HE, Zhiqiang, 6 Chuang Ye Road, Shangdi Information Ind., Beijing 100085 (CN); HUANG, Jingnan, 6 Chuang Ye Road, Shangdi Information, Haidian District, Beijing 100085 (CN); LIU, Xiandong, 6 Chuang Ye Road, Shangdi Information Ind, Beijing 100085 (CN); LUO, Yujin, 6 Chuang Ye Road, Shangdi Information Ind, Beijing 100085 (CN); ZHANG, Dekui, 6 Chuang Ye Road, Shangdi Information, Haidian District, Beijing 100085 (CN); ZHANG, Yuanyi, 6 Chuang Ye Road, Shangdi Information, Haidian District, Beijing 100085 (CN); REN, Yanpin, 6 Chuang Ye Road, Shangdi Information, Haidian District, Beijing 100085 (CN); LI, Ming, 6 Chuang Ye Road, Shangdi Information, Haidian District, Beijing 100085 (CN); MENG, Chuang, 6 Chuang Ye Road, Shangdi Information, Haidian District, Beijing 100085 (CN); JIANG, Shan, 6 Chuang Ye Road, Shangdi Information, Haidian District, Beijing 100085 (CN)
(74) Representative: Hess, Peter K. G.
(86) International application number: PCT/CN2003/000361
(87) International publication number: WO 2003/098873

(56) References cited:
- WO-A-00/28436
- WO-A-02/17560
- CN-A- 1 409 516
- GUTTMAN E: "Service Location Protocol: Automatic Discovery of IP Network Services" IEEE INTERNET COMPUTING, IEEE SERVICE CENTER, NEW YORK, NY, US, vol. 3, no. 4, 1 July 1999 (1999-07-01), pages 71-80, XP002140936 ISSN: 1089-7801
- CZERWINSKI S E ET AL: "AN ARCHITECTURE FOR A SECURE SERVICE DISCOVERY SERVICE" MOBICOM '99. PROCEEDINGS OF THE 5TH ANNUAL ACM/IEEE INTERNATIONAL CONFERENCE ON MOBILE COMPUTING AND NETWORKING. SEATTLE, WA, AUG. 15 - 20, 1999; [ANNUAL ACM/IEEE INTERNATIONAL CONFERENCE ON MOBILE COMPUTING AND NETWORKING], NEW YORK, NY : ACM, US, vol. CONF. 5, 15 August 1999 (1999-08-15), pages 24-35, XP000896069 ISBN: 978-1-58113-142-0
- EDWARDS W K: "core JINI" CORE JINI, PRENTICE HALL PTR, INDIANAPOLIS, US, 1 June 1999 (1999-06-01), pages 64-76-197-211, XP002212591
- SHI MEI-LIN, YING CHUN: 'Routing protocols for ad hoc networks' JOURNAL OF CHINA INSTITUTE OF COMMUNICATIONS vol. 22, no. 11, November 2001, pages 93 - 103, XP008102348

## Description

### Background of the invention

### Field of invention

This invention relates to a method for dynamically networking among a plurality of devices in a computer network.

### Description of prior art

Conventional network technologies have provided a basic communicating and addressing method for network devices, such as a family of Transmission Control Protocol/Internet Protocol (TCP/IP). However, there still exists a need for an architecture and a method that can realize dynamically networking and sharing resource among the devices.

The dynamically networking among devices involved in the present invention means that: a) there is no need to modify network parameters of a device in a network; b) a node can be constructed by dynamically choosing the relative devices from the network, and the node can realize a function which cannot be achieved by a single device, or improve the performance of original function of the single device; and c) two nodes can directly communicate and share resource therebetween so as to extend a function of a single node.

The resource sharing involved in the present invention refers to that in a case where the number of the network devices is not increased, the devices in the network can readily issue the resources provided by themselves, and also can retrieve and use the resources provided by other devices readily.

A lot of standards and methods have already been proposed by some organizations and companies all over the world, and they can, in different degrees, realize the dynamic networking and resource sharing among the network devices.

UPNP Forum has already proposed a network architecture in view controlling home appliances. Those network devices based on UPNP can dynamically form a peer-to-peer network, in which each device can dynamically issue its resource and retrieve the resource of other devices in the network. But what UPNP provided is a method for a device as a control point controlling another device, but not a method to realize dynamically networking and resource sharing among a plurality of devices.

CORBA is a distributed computing technique across platforms proposed by International Object Management Group. This technique requires that there is a central server dedicated for realizing object retrieve in the network. Such an application model is more suitable for a Client/Server mode but can not support the dynamic networking, resource sharing and cooperation among a plurality of devices very well.

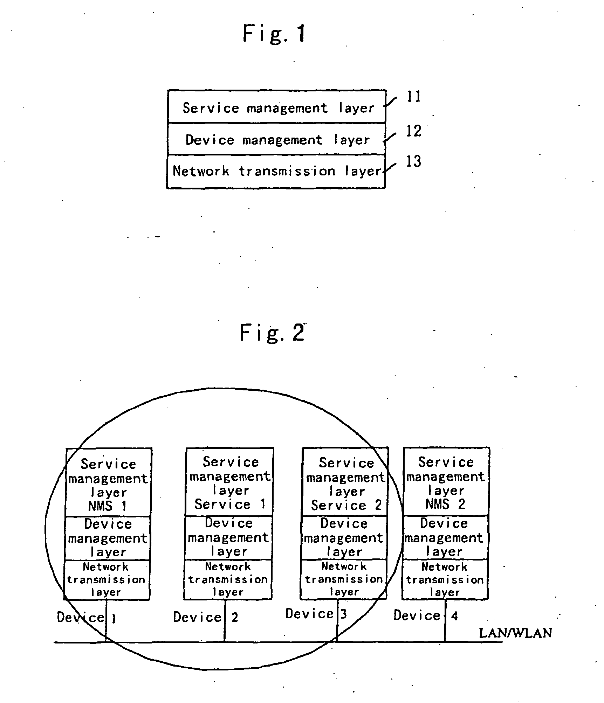

Document XP 002140936 relates to a method for automatically discovering the location of a required service. Therefore, a Service Location Protocol (SLP) is used. The SLP establishes a framework for resource discovery that includes three agents that operate on behalf of the network-based software, namely user agents (UA) perform service discovery on behalf of client software, service agents (SA) advertise the location and attributes on behalf of services and directory agents (DA) aggregate service information into what is initially a stateless repository. Figure 1 illustrates the two different methods for DA discovery: active or passive. In active discovery, UAs and SAs multicast SLP requests to the network. In passive discovery, multicast advertisements for their services and continue to do this periodically in case any UAs or SAs have failed to receive the initial advertisement. If no DA is present a UA multicasts the same requests to the SAs that it would have unitcast to the DA. Furthermore, SLP is suitable for the home or small office environment.

Document XP 000896069 relates to an architecture and implementation of a secure Service Discovery Service (SDS). Thus, clients require a directory service that enables them to locate services that they are interested in using. Services need to perform three tasks in order to participate in the SDS system. The first task is to continuously listen for the SDS server announcements on a global multicast channel in order to determine the appropriate SDS server for its service descriptions. After determining the correct SDS server, a service then multicasts its service descriptions to the proper channel. Finally, individual services are responsible for contacting a capability manager and properly defining the capabilities for individual users. The SDS uses capabilities as an access control mechanism to enable services to control the set of users that are allowed to discover their existence. To avoid burdening each service with the requirement that it generate and distribute capabilities to all its users a Capability Manager (CM) is used to perform this function.

Microsoft® Corporation has proposed a DCOM distributed computing technique. But the implementation of such a technique is only limited to the system platform of Microsoft, and only a new Client/Server computing platform is provided.

Currently, various new appeared peer-to-peer techniques focus on how to realize resource sharing without depending on a central server in Internet environment. Typical technical solutions include Freenet, Gnutella and Napster. However, the extensions of sharing resources realized by those typical solutions are much smaller, and are most of them are limited to share static files.

Grid has proposed a technique for realizing resource sharing in a network environment across organizations or companies. However, hitherto, this technique is still only a developing frame and cannot provide an embodied method for dynamically networking and resource sharing.

Thus, although various existing distributed computing techniques have already proposed a plurality of technical solutions for specific resource issuing and retrieves with respect to single device, the problem involved in dynamically net working and resource sharing and cooperation among a plurality of devices is still remaining unsolved.

### Summary of the invention

Therefore, an object of the present invention is to provide a method for realizing dynamically networking which can realize dynamically networking among a plurality of devices in a network. According to the method of the present invention, the devices in the network are capable of connecting with each other freely and dynamically without changing original network parameters. Further, each of devices in the network can not only issue its resource, but also retrieve and use the resource of other devices.

To achieve the above objects of the present invention, there is provided a method for dynamically networking among a plurality of devices according to claim 1. The method comprises the steps of:
A1. installing a dynamically networking and resource sharing module set on each of the plurality of devices which need to realize dynamically networking and resource sharing, said module set including a network transmission layer module for transmitting and receiving data; a device management layer module for controlling and managing the connection among the plurality of devices; a service management layer module for performing a service management for the device itself and a node, wherein the node is a combination of a plurality of devices, wherein these devices periodically send device announcement messages to the computer network with multicasting;
B1. a device among the plurality of devices serves as a node control device of the node and sends a node announcement message of announcing the existence of the node control device with multicasting;
C1, being one of
C1a. a device finds the node by monitoring the node announcement message, and a device which requests to join into the node registers its service information which can be provided to the node control device of the node; or
C1 b. the node control device configures other devices on the network so that those devices must register to the node control device its service information which can be provided and joins into the node; and
D1. the device which has joined into the node finds another device that provides a desired service by indexing the node control device, and obtains the desired service from the other device by sending a service calling message to the other device, wherein
the node control device is dynamically designated; and wherein said node comprises a global node and a specific node in a broadcasting domain, service entities on all devices in the same broadcasting domain belong to the same global node in default, and a service entity on any one of the devices can create a specific node other than the global node, and one device is active only in one specific node at the same time.

Further embodiments of the invention are disclosed in dependent claims 2 to 9.

According to the present invention, a plurality of services (devices) are dynamically combined by creating global nodes and specific nodes, thereby sharing resource. One global node may have one service entity (device) which is able to perform node management, and if such an entity exists, all the other services (devices) register to said service (device) and are managed by said entity (device). All the service entities (device) belonging to the same global node in default can create a specific node other than the global nodes and can invite or configure other service entities (devices) to register in the newly created specific node. After the creation of a new global node or a specific node, its node management service entity announces the message of its existence to the network, and other service entities, as soon as receiving the announced message from the global or specific nodes, can send a register request to the management service entity (device) of the global or specific nodes. Thus, the object of the present invention that each of devices in the network can not only announce its own resources but also retrieve and use the resources of other devices is achieved.

According to the present invention, the method to implement dynamically networking and resource sharing among devices further comprises a communicating method among nodes, including steps:
E1. a source node control device and a destination node control device send respective node announcement messages of their own nodes to the network respectively;
F1. the source node control device and the destination node control device, by using the procedures of initiating request and receiving request, establish a relationship of resource sharing between the two nodes and exchange resource information respectively;
G1. a device within the source node sends a request, which is transferred by the destination node control device, to its node control device to call for the resource of a device within the destination node;
H1. the device within the destination node sends back a resource calling response, which is transferred by the source node control device, to the device within the source node.

According to the present invention, the node resource information can be exchanged with each other by establishing a resource sharing relation through communication mechanism between two nodes (which may be between global nodes, between specific nodes, and between a global node and a specific node). Thus, the devices within the two nodes can perform resource sharing through respective node control device.

The method according to the present invention allows home appliances dynamically networking as a whole, and allows various devices to provide a systematical and complete service for a home user jointly. The characteristic of openness possessed has fully considered future development and support to existing techniques and devices.

The method according to the present invention supports both a wired network and a wireless network.

### Brief description of the drawings

Figure 1 is a schematic diagram showing a logic structure for devices which abstracts all physical network devices in the present invention into respective logic devices in view of functionalities;
Figure 2 is a schematic diagram showing the constitution of a global node according to an embodiment of the present invention;
Figure 3 is a diagram showing a procedure for generating a (global or specific) node according to the embodiment of the present invention;
Figure 4 is a diagram showing a procedure for communicating among nodes according to the embodiment of the present invention;
Figure 5 is a diagram showing when the node generation mechanism according to the embodiment of the present invention is applied to a meeting room;
Figure 6 is a diagram showing one example of a home network;
Figure 7 is a diagram showing a topological structure of a home backbone network connected in a Master/Slave connecting mode and resource sharing;
Figure 8 is a diagram showing a topological structure of a home backbone network connected in a peer-to-peer connecting mode and resource sharing;
Figure 9 is a diagram showing a hierarchical structure of a device protocol stack used by the home backbone network;
Figure 10 is a diagram showing a transmission management layer shown in Figure 9;
Figure 11 is a diagram showing an intermediate protocol layer shown in Figure 9; and
Figure 12 is a flow chart showing the process of dynamic networking and resource sharing among devices in the home backbone network according to the present invention.

### Detailed Description of the Preferred Embodiments

The present invention will be described referring to the accompanying drawings.

The method according to the present invention need not increase any new device on the basis of original devices existing in a network, but only need to install additional software onto the devices desired to have functions of dynamic networking and resource sharing. The dynamic networking and resource sharing in a limited extension according to the present invention is accomplished by that software. One device can intelligently establish an underlayer communication link with other devices, announce information relative to it own to other devices, find other devices which possess such software in that network, and dynamically and intelligently form one node (a combination of a plurality of services) together with them in demand so as to support a sharing and integration of services distributed on the plurality of devices. Those services are provided by a resource entity which has a certain function, and includes cooperation among software or hardware or both of them. For example, in a printer, a physical device of the printer provides a printing service through a printing driving program.

Referring to Fig. 1 which is a schematic diagram of a logic structure for devices which abstracts all physical network devices in the present invention into respective logic devices in view of functionalities, a service management layer 11, a device management layer 12 and a network transmission layer 13 are contained. The network transmission layer 13 is used to transmit and receive data. The device management layer 12 performs a control and management to a connection among the devices, such as identification authentication among the devices. The service management layer 11 performs a service management to the devices themselves, such as security checks to a service invocation.

It is necessary to form a node consisting of a plurality of devices in the network to implement the method according to the present invention. It also need a device to implement a node management function. The device, which implements the node management function, is a node control device. That is, one node consists of one node control device and possible a plurality of devices. A service entity, which can perform the node management function, must exist on the node control device. And a service entity, which can perform the node management function, may also exist on each device for implementing the method according to the present invention. Inside of one node, however, a service management service entity on only one device is active at the same time.

The node control device may be designated by users or dynamically generated.

The nodes in the present invention may include two types of nodes, one is global nodes and the other is specific nodes. All service entities in the same broadcasting domain belong to a same global node in default. Any one of the service entities can create a specific node other than the global node.

Referring to Fig. 2, this figure show a schematic diagram of constituting a node for implementing the method according to the present invention. As shown in FIG. 2, a device 1, a device 2, a device 3 and a device 4 are connected to a Local Area Network (LAN) or a Wireless Local Area Network (WLAN). The devices 1, 2 and 3 encompassed in the elliptic line constitute a node 1. A service entity NMS1 (Node Manager Service) managing the node 1 is provided in the device 1 and forms a control device for the node 1. The device 2 and the device 3 are server (Service) 1 and server (Service) 2, respectively. A service entity NMS 2 managing a node 2 is provided in the device 4 and forms a control device for the node 2.

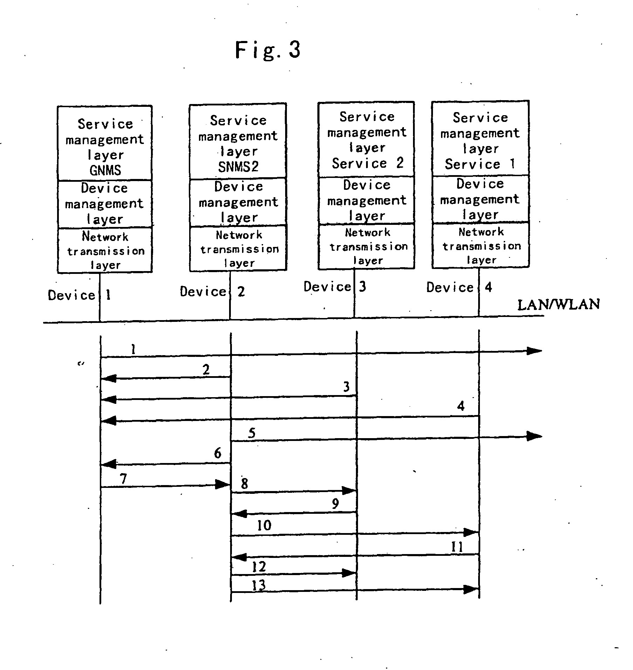

Referring to Fig. 3, a device 1, a device 2, a device 3 and a device 4 are connected to LAN/WLAN, wherein a global node management service (GNMS) is a service entity on the device 1 to perform a global node management, a specific node management service (SNMS) is a service entity on the device 2 to perform a specific node management. Service 1 is a service on the device 3, and Service 2 is a service on the device 4.

The meanings of the steps in Fig. 3 are as follows:
Step 1, the device 1 creates a global node and announces its global node message to network LAN/WLAN;
Step 2, Step 3 and Step 4, the device 2, the device 3 and the device 4 respectively join into the global node;
Step 5, the device 2 creates a new specific node, and announces a relative specific node message to the network;
Step 6, the device 2 enquiries service information existing in the network from the global node;
Step 7, the device 1 returns the corresponding service information to the device 2;
Step 8, the device 2 invites the device 3 in which Service 1 exists to join into the specific node;
Step 9, the device 3 joins into the specific node;
Step 10, the device 2 invites the device 4 in which Service 2 exists to join into the specific node;
Step 11, the device 4 joins into the specific node;
Step 12, the device 2 sends a service calling message to Service 1;
Step 13, the device 2 sends a service calling message to Service 2.

FIG. 3 shows a generating procedure of a node including a global node or a specific node. A complete node generating and removing procedure should comprise the steps of device announcement, node creation, node expansion, node cancellation, global node management and device election etc. It should be noted that during dynamic networking, it is not necessary that the global node and the specific node co-exist. Dynamic networking and resource sharing among can be achieved only if the global node or the specific node is created.

In above steps, all the devices existing in the same broadcasting domain belong to a same global node in default. In case of being allowed by its own abilities, any device can serve as the node control device of the global node only if the ability of the device allow it. However, only one global node control device such as the device 1 can exist in one broadcasting domain at the same time. A lifetime of the global node will be automatically ended when there is no control device in the network.

If the global node has already exists in the broadcasting domain where the device is, the device should join into this global node. When joining into the global node, the device should register its own service information to the control device of the global node. The global node control device manages the services on all devices, and the global node only serves to perform a service indexing function for the management to the respective device service.

Any one of the devices, such as the device 2 in the network, can create the specific node besides the one global node. That device can invite other devices to join into the newly created specific node. Except the control device of the global node, one device can only be active in one node at same time. The node control device which creates a specific node maintains the lifetime of the specific node.

The control device of the node controls the lifetime of the node, e.g. device 1 controls the lifetime of the global node, and device 2 controls the lifetime of the specific node. When the control device decides to cancel a previously created node, it will send node quitting message to respective devices in the node. When quitting a node ever participated, the device will cancel all the service information of the device from the control device of the global node.

After the creation of a new node including the global node and the specific node, the node control device of the node, i.e. device 1 and device 2 in the drawing, will be responsible for announcing the message of existence of the node to the network, and the node announcement message is sent with multicasting. The node announcement message at least includes a network addressing identification of the node control device, the type of the node, an identifier of the node, and other relative property information. Other devices, as soon as they monitor the node announcement message, can send a joining request to the node control device of the node such as device 1 and device 2. Or, the node control device configures other devices on the network so that those devices must register service information provided thereon to the node control device so as to join into the node.

All devices in the network perform device information announcement with multicasting. They periodically multicast device announcement messages to the 13 network, and indicate network addressing identifications of the devices, devices descriptions, and service information on the devices contained in the messages so that other devices can obtain information relative to the devices.

The node control device periodically announces message to the network about its existence in the network. The node announcement message at least includes a network addressing identification of the node control device, the type of the node, an identifier of the node and other relative property information. The node announcement message is transmitted with multicasting.

Any device in the network can look up the nodes existing in the network in an active or passive mode. The active mode refers to that the device sends a node looking up message to the network with multicasting, and the node control device satisfying the looking up criteria sends the node announcement message to the device from which sent a looking up message with unicasting. The passive mode refers to that the device monitors a designated multicasting address to obtain the message of the node in the same broadcasting domain or different broadcasting domain.

When a device finds that there is a node message in the network, the device can initiate a node joining request to the control device of the node, and the node control device determines whether the device is permitted to join into the node, i.e. whether a node expansion is performed.

The node control device may also obtain device messages currently appearing on the network by monitoring the device announcement message on the network. Also, the node control device may initiate a node joining invitation to the device and the device determines whether it will join into the node or not.

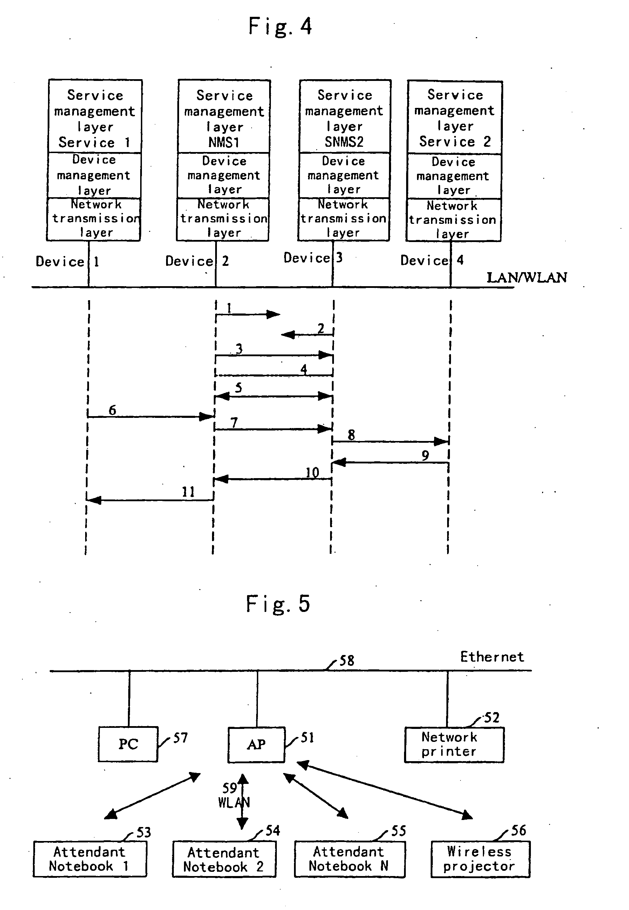

Referring to Fig. 4, the communication mechanism among devices is shown. A device 1, a device 2, a device 3 and a device 4 are connected to a LAN/WLAN, wherein NMS 1 (Node Management Service) is a service entity on device 2 for performing the management to a global or specific node 1, NMS 2 is a service entity on the device 3 for performing the management to a global or specific node 2, and Service 1 is a service on the device 1 within the node 1, Service 2 is a service on the device 4 within the node 2. NMS 1 and NMS 2 perform communication between nodes as follows:
Step 1, device 2 sends a node announcement message of node 1 to the network;
Step 2, device 3 sends a node announcement message of node 2 to the network;
Step 3, node 1 initiates a resource sharing request to node 2;
Step 4, node 2 accepts the resource sharing request from node 1, and a resource sharing relationship between nodes is established between node 1 and node 2;
Step 5, node 1 and node 2 exchange node resources information;
Step 6, Service 1 on device 1 within node 1 initiates a calling request to Service 2 on device 4 within node 2;
Step 7, the control device of node 1 forwards the calling request to the control device of node 2;
Step 8, the control device of node 2 forwards the calling request to device 4;
Step 9, Service 2 of device 4 sends back a calling response to the control device of node 2;
Step 10, the control device of node 2 forwards the calling response to the control device of node 1;
Step 11, the control device of node 1 forwards the calling response to device 1.

In above steps, the communication between two different global or specific nodes is executed by respective node control devices. The control device of the two nodes can find each other by the node announcement message of the opposite party. The control device of one node (called a source node control device) can initiate a resource sharing request to the control device of another node (called a destination node control device). The destination node control device accepts or rejects the node resource sharing request according to its own security strategy. After the two nodes establish the resource sharing relationship, they can exchange node resources information. The devices within the two nodes can perform resource sharing through respective node control devices. The calling response therein includes joint control information between the service calling information and service.

Referring to Fig. 5, it shows that the method according to the present invention is applied to a meeting room so as to form a network structure in an intelligent meeting room. In Fig. 5, referential numeral 51 denotes an AP device for providing wireless access, 52 denotes a network printer, 57 denotes a PC (personal computer). AP device 51, network printer 52 and PC 57 are connected over Ethernet network 58. An attendant notebook 1 (53), an attendant notebook 2 (54), ..., an attendant notebook N (55), a wireless projector 56 and PDAs, and mobile phones (not shown) are used as mobile devices and connected with the AP device 51 over the WLAN 59.

In the environment as shown in the figure, AP device 51 for providing wireless access, network printer 52 and PC 57, wireless projector 56 are stationary devices in the meeting room. In terms of the functionalities and performances of AP device 51, network printer 52 and wireless projector 56, they can not be used as a global node control device. After a plurality of (e.g. N, where N is a positive integer) attendant notebooks come into the meeting room, the administrator of the meeting room designates one of PC device 57 and the N attendant notebooks as the global node control device.

Network printer 52 and wireless projector 56 can register their own services to the global node control device by monitoring the global node announcement message.

After forming the global node, all the attendant notebooks need not install the printer driving program in advance and need not directly connect with the wireless projector, but can perform an ordered control to network printer 52 and wireless projector 56 under the control of the global node control device. Each of the attendant notebooks can use wireless projector 56 and/or network printer 52 by creating a specific node without conflicting.

With the increase of the life quality, the number of the devices such as information devices, communication devices, entertainment devices, home appliances, automatic devices, security (monitoring) devices in a home increases. Meanwhile, because of the wide use of personal computers and Internet in home, the development of telecommunication technologies and the advance of intelligent devices, the home network is intended to be paid more and more attention to, and the demands to a simple, flexible and reliable home network are increasing. Currently, there are a lot of related technical terms, such as Smart Home, Electronic Home, e-Home, Digital Family, Network Home, and Intelligent Home. The contents and concepts covered by these technical terms are basically similar, and are all originating from the home network. Therefore, the technology of home network is a key technology to digitalize the home devices. With the method according to the present invention, all the electrical equipments in a home can be dynamically connected as a whole, and perform devices interconnection and information delivery at any time.

Specifically, home network comprises following meanings:
1. Information devices, communication devices, entertainment devices, home appliances, automatic devices, security (monitoring) devices in a home can be interconnected with each other and be dynamically networked to realize resource sharing and form a home intelligent network system;
2. The home network connects with a society network or Internet network through a gateway so as to realize information exchange with the environment outside of the home;
3. The home devices and the network connected thereto should satisfy the basic requirements of security, convenience, comfortable, healthy and environmental protection, so as to make persons enjoy and happy;
4. The concept of human being centered should be embodied, it should be easily to use, secure, convenient and unexpensive so as to meet the requirements of family life.

The requirements to home networks are completely different from those to commercial networks. A topological structure of network architecture for Digital Family mainly includes two hierarchies, one is a backbone network and the other is a control subnet. The backbone network is used to realize the interconnection among information devices, communication devices and entertainment devices etc. (generally refer to the devices with good computing capabilities and memory capabilities). The control subnet connects the home appliances such as a refrigerator, a washing machine, an air conditioner to the backbone network through a control gateway. For realizing interconnection with some wireless mobile devices and making the users enjoy an arbitrary information access, the home backbone network further supports wireless connecting and access mode, and thus with respect to networking mode, the home backbone network should contain two parts, i.e. wired part and wireless part. Furthermore, the external Internet can connect to the home backbone network through a portal gateway so as to perform a wideband access.

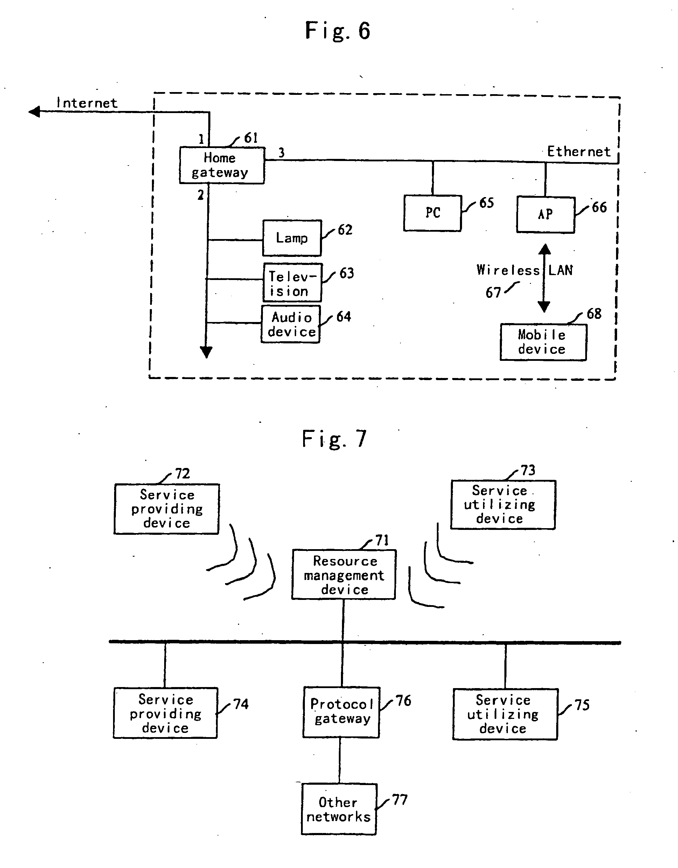

Referring to Fig. 6, this figure shows an embodiment of the structure of the home network, which is implemented by Ethernet, established in accordance with the networking method of the present invention. The backbone network has two transmission modes, i.e., wired and wireless. The requirements to home backbone network are mainly high rates transmission, high quality of service, dynamic networking and effective resource sharing. Various and complex appliances in home can be made to interconnect and operate jointly and realize dynamic networking and resource sharing among devices effectively.

In Fig. 6, referential numeral 61 denotes a home gateway including a portal gateway and a control gateway, 62 denotes a lamp, 63 denotes a television set, 64 denotes a audio device, 65 denotes a PC, and 66 denotes an AP device for providing a wireless access, which connect to mobile device 68 including PDAs, notebook computers etc. through WLAN 67. The home gateway 61 has a performance of low power consumption without power off. Further, the home gateway 61 has various network interfaces, for example, interface 1 is an external Internet interface for connecting to Internet, interface 2 is an RS232 interface for connecting to lamp 52, television 53 and audio device 54 etc., and interface 3 is an Ethernet interface for connecting to the PC 65, AP machine 66 and so on. The home gateway 61 can be designated manually as the global node control device.

The AP device 66 within the backbone network is a device for providing wireless access, and the mobile device 68 connected to the backbone network through the WLAN 67. The node control device (also referred to as a resource management device) on the backbone network should be an information device such as a PC that various services can be run thereon. Here, the home gateway 61 has a function of the protocol gateway through which the backbone network can interact with the devices such as television, audio device and lamp within Internet 1 and in control subnet 2. In addition, the home gateway 61 can function as a resource management device to which all the devices on the backbone network register. The home gateway 61 is responsible for indexing all the devices and their services on the backbone network. The network devices such as the PC device 65, the mobile device 68 in the home can find the global node which control device is the home gateway 61 by monitoring the global node message after entering into the Ethernet,.

Conventional home appliances such as the lamp 62, the television 63 and the audio device 64 can connect to the home gateway 61 through various home network standard interfaces such as RS232 interface based on standardized home network protocols such as CEBus. In the home gateway 61, an issuance and control to CEBus network service are performed by running a CEBus network proxy service entity.

After joining into the global node, the PC 65 or the mobile device 68 can find respective devices in the home network by using node service and retrieve service provided by the global node control device, i.e. the home gateway 61. Furthermore, it can create a specific node under the management of the global node control device to thereby control respective devices. For example, the PC 65 or the PDA belonging to mobile device 68 can be used to control the television 63, audio device 64 and so on.

Similarly, with the node generation mechanism of the present invention, those devices outside the home can access into the home network by the network access service provided by Internet and the home gateway 61, and thereby join into the node in the home network so as to perform a remote control to the home electrical appliances.

Next, a networking method for realizing a home backbone network (a global node) by using the method of the present invention will be further described by combination with the embodiments. The home backbone network constitutes an information/multimedia network of the family, and achieves a dynamic networking interconnection among information devices, communication devices, entertainment devices and so on. The data transmitted in the home backbone network mainly includes information such as text, picture, audio and video etc.

In the following, the related members, including information devices, communication devices, entertainment devices etc., of the home backbone network can interact with Internet and some home appliances such as refrigerator, washing machine, television, audio device and so on by protocol gateway. Therefore, these devices are carriers for providing services and acquiring services. Each of the devices supporting the backbone protocol has a unique identifier which is called a device identifier. The involved protocol gateway provides a service for converting different protocols. The resource management device, i.e. the global node control device, refers to a device which can provide a function of registration and service indexing to the devices in the network. The service providing device refers to a device for providing services to other devices in the network. Said service refers to a function entity running on the devices and consistent with the standard interface defined by the backbone network protocol, and each service has an identification number called service identification which can be a 32-digit unsigned integer type number. The service identification is assigned by the device providing such service. Said service providing device refers to a device for providing services to other devices in the network. Said service utilizing device refers to a device utilizing the services provided by other devices in the network. Said unicasting refers to that a sending device sends information to a designated receiving device. Said multicasting refers to that a sending device sends information to a set of designated receiving devices. In actual home network, a device can serve as a service providing device to provide services to other devices, and at the same time as a service utilizing device to utilize services provided by other devices.

Referring to Fig. 7, a topological structure of a home backbone network established in a Master/Slave connecting mode is shown. In the network, there exists a centralized control device, i.e. a resource management device 71. Other devices in the network include a service providing device 72 and/or a service utilizing device 73 accessing into the backbone network in a wireless mode, and a service providing device 74 and/or a service utilizing device 75 accessing into the backbone network in a wired mode. The service providing devices 72, 74 and/or the service utilizing device 73, 75 will register to the resource management device 71 and the registration shall be successful when they join into the home backbone network. The activities of other devices joined into the home backbone network are controlled by the centralized control device, that is, the service function is indexed from the resource management device. A protocol gateway 76 performs communication between the home backbone network and other network 77 such as an external Internet.

A home backbone network device can be not only a service providing device, but also a service utilizing device. The resource management device can serve as a service providing device or a service utilizing device in addition to take the task of resource management.

Generally, the home backbone network is implemented by a wired Ethernet network, or by a wireless Ethernet network, or by a combination of a wired and wireless Ethernet network, whose characteristics are wide frequency band and high rate.

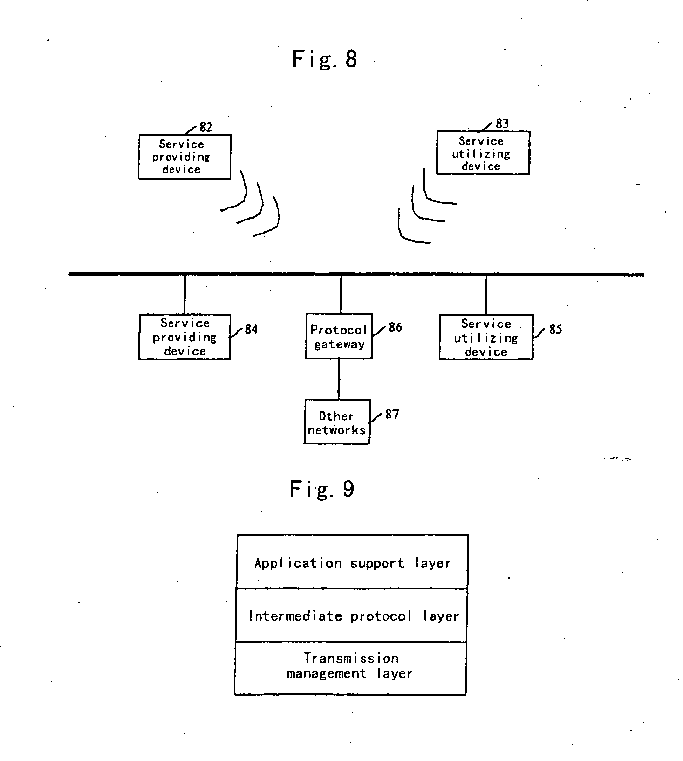

Now referring to Fig. 8, this figure shows a topological structure of a home backbone network established in a peer-to-peer connecting mode. The home backbone network includes a service providing device 82 and/or a service utilizing device 83 accessing into the backbone network with a wireless mode, and a service providing device 84 and/or a service utilizing device 85 accessing into the backbone network with a wired mode. A protocol gateway 86 performs communication between the home backbone network and other network 87 such as an external Internet.

The difference from the Master/Slave mode as shown in Fig. 7 is in that there is no centralized control device, i.e., resource management device, in the network. In a peer-to-peer mode, the relationships among the-service providing device, the service utilizing device, and the protocol gateway are equivalent. In a peer-to-peer network, one device can be both the service providing device and the service utilizing device.

The procedure to establish the peer-to-peer connection is realized by sending a peer-to-peer connection establishing request from a source device to a destination device and sending back a peer-to-peer connection establishing response from the destination device to the source device. The source device and the destination device can be either the service utilizing device or the service providing device which are interchangeable.

The method for establishing the home backbone network according to the present invention can establish a basic frame of the home backbone network, and on the basis of the basic frame, the dynamic networking among respective devices in the home network can be flexibly and conveniently achieved and thus the resource sharing can be realized.

Next, a method for realizing dynamic networking and resource sharing among devices in a home backbone network by using the method according to the present invention will be described by referring to embodiments and drawings. Supporting dynamic networking in a home backbone network means that the devices in the home backbone network can dynamically select relevant devices from the network to form a home network to realize a function that can not be achieved by a single device, or to improve performance of an original function of any a single device without performing configuration of network parameters in advance manually. Resource sharing means that the devices in the home backbone network can announce the resource provided by themselves and at the same time can conveniently retrieve and utilize resources provided by other devices; as well as the function of a single device can be extended through direct communication and resource sharing between any two devices.

The existing TCP/IP protocol has provided a basic communicating and addressing method for the network devices. In the home backbone network, based on the particularly requirements of the home networking, in order to realize dynamic networking and resource sharing in the extension of the home more efficiently, the home backbone network protocol is designed based on TCP/IP protocol in the present invention. In the home backbone network, the dynamic networking and resource sharing among devices in the home backbone network includes procedures of a device discovery, a service discovery, a device registration, a device connection, a service registration, a service access, a service invocation and so on which are processed according to corresponding sub-protocols.

Device manufacturers and service providers provide information about the devices and the services. Those devices information and service information thereof are encapsulated according to the protocol for the backbone network. The encapsulated information is issued in the network by using the device discovery procedure and the service discovery procedure. A home backbone network is dynamically established among a plurality of devices through the procedures of device registration, service registration and device connection. In the home backbone network, there may be one home resource management device functioning as centralized index and service access authorization (Master/Client connecting mode), and there may be no home resource management device (peer-to-peer connecting mode). In the latter case, all devices on the network connect with one another in the form of complete peer-to-peer. The services on the devices are shared as resources by using service calling procedure.

Referring to Fig. 9, a structure of a protocol stack for a backbone network used by the method according to the invention is shown. Logically, the protocol stack is divided into three layers including an application support layer, an intermediate protocol layer and a transmission management layer from the top to the bottom.

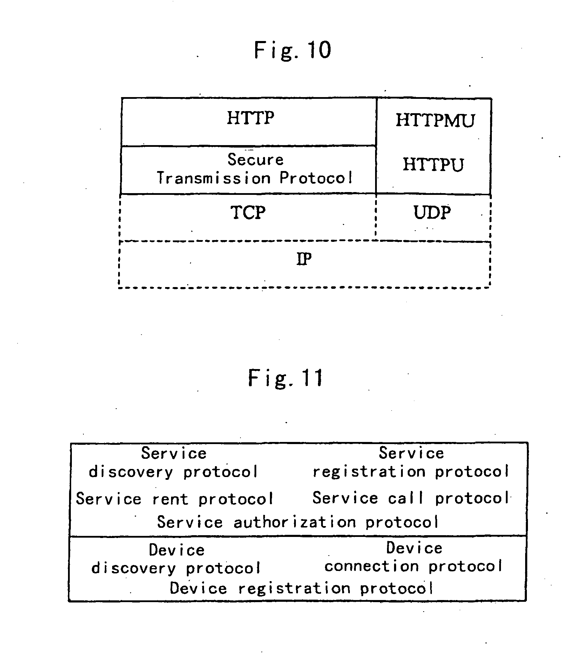

The transmission management layer is a basis for the intermediate protocol layer to exchange data, and used for data exchanges among devices and services. All data exchanges are based on TCP/IP protocol. The transmission management layer is based on TCP/IP and HTTP protocols and its structure are shown in Fig. 10, and includes HTTP(HTTP, HTTPMU, HTTPU) protocol, secure transmission protocol, TCP(UDP) and IP from the top to the bottom. When transmission is based on TCP, the secure transmission protocol is responsible for the security of a transmission channel.

The intermediate protocol layer is used to realize the interconnection and resource sharing among the network devices. The intermediate protocol layer consists of several sub-protocols including a device discovery protocol, a device registration protocol, a device connection protocol, a service registration protocol, a service discovery protocol, a service rent protocol, a service authorization protocol, a service calling protocol, a device authentication and secure transmission protocol. The logical relationships among the respective sub-protocols of the intermediate protocol layer are shown in Fig. 11. Those sub-protocols located in a upper layer are the service discovery protocol, the service registration protocol, the service rent protocol, the service calling protocol, and the service authorization protocol in the order from the top to the bottom. Those sub-protocols located in a lower layer are the device discovery protocol, the device connection protocol and the device registration protocol in the order from the top to the bottom.

The device discovery protocol, the device registration protocol and the device connection protocol are the bases for the implementation of other sub-protocols in the intermediate protocol layer. On the basis of their running, the services can be operated by using the service registration protocol, service discovery protocol, service rent protocol, service invocation protocol and service authorization protocol, etc.

The application support layer provides a software API access interface for upper applications. On the basis that the intermediate protocol layer provides the core protocols of interconnections and resource sharing, a application support layer protocol provides a corresponding software interface for a certain application development. Also, the interoperation among the same type devices from different manufacturers can be ensured by designing a uniform application support layer protocol.

The devices in the home backbone network are connected through a Local Area Network (LAN) or a Wireless Local Area Network (WLAN). The primary step for realizing dynamic networking and resource sharing is device discovery. Each of devices compatible with the method according to invention periodically announces relevant information of the device to the network in a form of multicasting. The announcement messages include device description information, the network addressing identification of the device, the service information provided by the devices. The device can obtain the message of existence of other devices by monitoring device announcement messages of other devices, and can also send request information to look up devices with multicasting which contains looking up criteria. If those looking up criteria in the request information are satisfied, the device receiving the looking up request information will return its own device announcement information in a form of unicasting.

When there is a home resource management device generally designated by users, a home backbone network consists of one home resource management device and those devices registering thereto. The generation procedure of such a home backbone network is as follows.

If a resource management device is designated in the service utilizing devices or in the service providing devices, and when the resource management device exists in the network, the service utilizing devices or the service providing devices will initiate the registration procedure to the resource management device;

If a resource management device is not designated in the service utilizing devices or in the service providing devices, and when a resource management device exists in the network, the service utilizing devices or the service providing devices will initiate the registration procedure to the resource management device.

If there are two or more resource management devices in the network at the same time, then according to a sequence of the program execution, the resource management device which first initiates the device registration procedure to the devices will be used as the resource management device for constituting the home network.

The service utilizing device or the service providing device can only register to one resource management device at a time.

After the service providing device successfully registers to the resource management device, it will also register its own services to the resource management device. The resource management device will maintain all device information and relevant service information registered thereto. At any time, the service utilizing device or the service providing device can quit the home network by sending the device cancellation request to the resource management device. Meanwhile, the resource management device will delete registration information of this device and registered service information thereon.

When there is no home resource management device, all home devices perform communication, dynamic networking and resource sharing in a peer-to-peer mode, and thus construct a home backbone network. The generating procedure of such a home backbone network is as follows:
A home device can obtain information of other devices by monitoring the multicast announcement messages of other devices, so as to perform a corresponding request to the services of other devices. The service utilizing device or the service providing device may drop off the home network unexpectedly, for example because of powered off. And also, the service utilizing device can initiate an announcement request to release the connection to the service providing device, and then quit the home network.

The home network finishing the dynamic networking shares the resources as follows.

For those home networks with the home resource management devices, a service utilizing device joining into one home network can obtain service information of other devices within the home network by initiating the service looking up request to the resource management device of the home network, can obtain the right to utilize a service by initiating the service renting request to the service providing device providing the corresponding service, and can utilize the service by initiating the service calling request to the service provided by the corresponding service providing device.

For those home networks without the home resource management devices, after a service utilizing device has established a peer-to-peer connection with a service providing device, the service utilizing device can obtain service information of the service providing device by initiating the service looking up request to the service providing device, can obtain the right to utilize a service by initiating the service renting request to the service providing device, and can utilize the service provided-by the service providing device by initiating the service calling request to the service providing device.

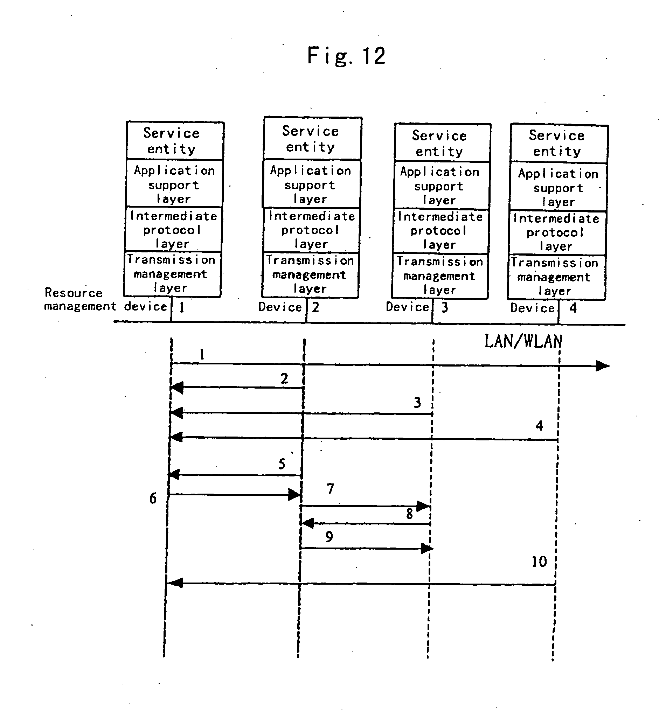

Referring to Fig. 12, a complete procedure of dynamic networking for a home backbone network is shown. The procedure includes a device announcement, a device registration, a service registration, a service look up, a service rent, a service calling and a device cancellation.

In Fig. 12, a device 1, a device 2, a device 3 and a device 4 are connected to a LAN or a WLAN. It is assumed that the device 1 is the resource management device of the home network, the device 2 is the service utilizing device, the device 3 and the device 4 are the service providing devices, and each of the devices 1, 2, 3, 4 has respective service entities of its own.

The meanings of the steps in Fig. 12 are as follows:
Step 1, the resource management device 1 announces a device announcement message outward;
Steps 2, 3 and 4, device 2, device 3 and device 4 as the service utilizing devices or service providing devices, in accordance with the announcement message of the resource management device 1, perform the device registration. The devices 2, 3 and 4 which have subjected to their device registration further register their service entities which have been locally registered to the resource management device 1;
Step 5, the service on the device 2 enquires (looks up) other service information in the network to the resource management device 1;
Step 6, the resource management device 1 returns relevant service information to the service on the device 2 which initiates the looking up;
Step 7, the service on the device 2 initiates the renting request information to the service on the device 3;
Step 8, the service on the device 3 returns the renting response information to the service on the device 2 which initiates the renting request;
Step 9, the service on the device 2 sends the calling information to the service on the device 3 which is successfully rented; and
Step 10, the device 4 sends the device cancellation to the resource management device 1 and then quits the network.

To implement the method according to the present invention, a security mechanism interacting among the devices in the home network must be established, which includes the establishment of the security mechanism when there is the home resource management device and the establishment of the security mechanism when there is no home resource management device.

When there is the home network resource management device, if a device intends to join into the home network, it must register to the resource management device. During the registration, the resource management device initiates authentication to the device, if the authentication is passed, then the registration of the device is successful. A dedicated key configuration management program charges for the authentication key, and the program can be provided on the resource management device or on any other device with human-computer interaction capability. The key configuration management program is in charge of not only the configuration of the authentication key between the device and the resource management device, but also the configuration of the connection authentication key between devices. The connection security key between devices is based on a private key, that is to say, the connection authentication key between devices is negotiated between the two specific devices. Another use of the connection authentication key between the devices is to establish the transmission key between the two devices on the basis of the key so as to perform secure transmission.

When there is no home network resource management device, if a device intends to join into the home network, the security mechanism is similar to that when the home resource management device exists, except that the authentication procedure between the device and the resource management device is replaced with the connection authentication procedure between devices. The connection authentication key between devices is issued by the key configuration management program and held locally to the device.

A dedicated key configuration management program charges for key configuration. The configuration is performed manually by a user. The key configuration management program needs the support of the human-computer interacting interface. If the device can not afford a human-computer interacting interface, then the configuration program can not be executed. At that time, the device can only remotely configure its device connection authentication key with aid of other devices which are able to execute the key configuration management program. The key configuration management program can be configured on any device having human-computer interacting capability. For example, when there is the resource management device in the home network, the key configuration management program can be configured on the resource management device; and when there is no resource management device in the home network, the key configuration management program can be configured on a device having human-computer interacting capability.

The configuring method of the device authentication key is that, the key configuration management program sends out the authentication configuration information in a form of multicasting. If the device, after receiving the message, judges that it is in a state that no key is set, the device then sends the key configuration request in response to the message. The configuration management program sets a corresponding key in response to this request. One example is that a default key is set when a device is produced in manufacturer, and when a key configuration management program performs a key configuration, it is needed to know the default key.

The method according to the present invention supports dynamic networking and resource sharing among devices over a home backbone network in the extension of the home network, so that the interoperability and easy usage among the home devices are improved. Any device in the home network which is compatible with a protocol for the backbone network can announce its own resource information to the network, and find resource information provided by other devices. Thus, resources are shared among devices in accordance with the protocol for the backbone network.

## Claims

1. A method for dynamically networking among a plurality of devices in a computer network, comprising the steps of:
A1. installing a dynamically networking and resource sharing module set on each of the plurality of devices which need to realize dynamically networking and resource sharing, said module set including
a network transmission layer module for transmitting and receiving data;
a device management layer module for controlling and managing the connection among the plurality of devices;
a service management layer module for performing a service management for the device itself and a node, wherein the node is a combination of a plurality of devices and wherein these devices periodically send device announcement messages to the computer network with multicasting;
B1. a device among the plurality of devices serves as a node control device of the node and sends a node announcement message of announcing the existence of the node control device with multicasting;
C1, being one of:
C1a. a device finds the node by monitoring a node announce-ment message, and a device which request to join into the node registers its service information which can be provided to the node control device of the node; or
C1b. the node control device configures other devices on the network so that those devices must register to the node control device its service information which can be provided and join into the node; and
D1. the device which has joined into the node finds another device that provides a desired service by indexing the node control device, and obtains the desired service from the other device by sending a service calling message to the other device, wherein
the node control device is dynamically designated; and wherein
said node comprises a global node and a specific node in a broadcasting domain, service entities on all devices in the same broadcasting domain belong to the same global node in default, and a service entity on any one of the devices can create a specific node other than the global node, and one device is active only in one specific node at the same time.

2. The method for dynamically networking among a plurality of devices according to Claim 1, wherein in said step A1, the devices periodically send the device announcement messages to the network with multicasting, said device announcement message at least includes a network addressing identification of the device, a device description information, and service information carried by the device.

3. The method for dynamically networking among a plurality of devices according to Claim 1, wherein in said step B1, a device serving as the node control device may be designated by a user or dynamically generated.

4. The method for dynamically networking among a plurality of devices according to Claim 1, wherein in said step B1, the node announcement message of the node control device at least includes a network addressing identification of the node control device, the type of the node and a node identifier of the node.

5. The method for dynamically networking among a plurality of devices according to Claim 1, wherein in said step B1, a lifetime of the node in the network is same as the duration of the creating and the removing of the node; when the node control device cancels a created node, it sends a node quitting notice to all the devices in the node.

6. The method for dynamically networking among a plurality of devices according to Claim 1, wherein said step C1 further comprises a step of a device which quits the node cancels the service information which can be provided by the device from the node control device of the node.

7. The method for dynamically networking among a plurality of devices according to Claim 1, wherein the indexing in said step D1 is performed by looking up nodes existing in the network in an active mode by the device, said active mode refers to that the device sends a node looking up message, which contains looking up criteria, to the network with multicasting, and the node control device satisfying the looking up criteria sends the node announcement message to the device which performs the looking up with unicasting.

8. The method for dynamically networking among a plurality of devices according to Claim 1, wherein the indexing in said step D1 is performed by looking up the nodes existing in the network in a passive mode by the device, said passive mode refers to that the device monitors a designated multicasting address to obtain the message of the node in the same broadcasting domain or different broadcasting domain.

9. The method for dynamically networking among a plurality of devices according to Claim 1, further comprising a communicating method among nodes, including the steps of:
E1. a source node control device and a destination node control device respectively send respective node announcement messages of their own nodes to the network;
F1. the source node control device and the destination node control device establish resource sharing between the two nodes, and exchange resource information by using procedures of initiating request and receiving request respectively;
G1. the device within the source node sends a request, which is transferred by the destination node control device, to its node control device to call for the resource of a device within the destination node;
H1. the device within the destination node sends back a resource calling response, which is transferred by the source node control device, to the device within the source node.

## Patentansprüche

1. Verfahren für eine dynamische Vernetzung zwischen einer Vielzahl von Vorrichtungen in einem Computernetzwerk, die Schritte aufweisend:
A1. Installieren einer dynamischen Vernetzung und ein Betriebsmittelteilungsmodulsatzes auf jedem der Vielzahl der Vorrichtungen welche besagten Modulsatz für die Realisierung von dynamischer Vernetzung und gemeinsamer Verwendung von Betriebsmitteln benötigen, aufweisend
ein Netzwerkübertragungsebenenmodul zum Übertragen und Empfangen von Daten;
ein Vorrichtungsmanagementebenenmodul zum Steuern und zum Managen der Verbindung zwischen der Vielzahl von Vorrichtungen;
ein Servicemanagementebenenmodul zum Ausführen eines Servicemanagements für das Gerät selbst und für einen Knoten, wobei der Knoten eine Kombination von einer Vielzahl von Vorrichtungen ist und wobei diese Vorrichtungen periodisch Vorrichtungsankündigungsnachrichten zu dem Computernetzwerk mit Multicasting senden;
B1. eine Vorrichtung aus der Vielzahl von Vorrichtungen dient als Knotenkontrollvorrichtung des Knotens und sendet eine Knotenankündigungsnachricht, welche die Existenz der Knotenkontrollvorrichtung mit Multicasting ankündigt;
C1, entweder:
C1a. eine Vorrichtung findet den Knoten durch Überwachen einer Knotenankündigungsnachricht, und eine Vorrichtung, welche anfragt dem Knoten beizutreten, registriert seine bereitstellbaren Serviceinformation der Knotenkontrollvorrichtung des Knotens; oder
C1b. die Knotenkontrollvorrichtung konfiguriert andere Vorrichtungen in dem Netzwerk, so dass diese Vorrichtungen in der Knotenkontrollvorrichtung ihre bereitstellbaren Serviceinformationen registrieren müssen und dem Knoten beitreten; und
D1. die Vorrichtung, welche dem Knoten beigetreten ist, findet eine andere Vorrichtung, die einen gewünschten Service bereitstellt durch Indizieren der Knotenkontrollvorrichtung, und erhält den gewünschten Service von der anderen Vorrichtung durch Senden einer Serviceabrufnachricht zu der anderen Vorrichtung, wobei
die Knotenkontrollvorrichtung dynamisch bestimmt ist; und wobei
besagter Knoten einen globalen Knoten und einen spezifischen Knoten in einer Broadcasting-Domäne aufweist, Serviceeinheiten auf allen Vorrichtungen in derselben Broadcasting-Domäne voreingestellt zu dem gleichen globalen Knoten gehören, und eine Serviceeinheit, auf jeder der Vorrichtungen, einen spezifischen Knoten erschaffen kann, der von dem globalen Knoten verschieden ist, und eine Vorrichtung nur in einem spezifischen Knoten zur selben Zeit aktiv ist.

2. Verfahren für eine dynamische Vernetzung zwischen einer Vielzahl von Vorrichtungen gemäß Anspruch 1, wobei in besagtem Schritt A1 die Vorrichtungen periodisch die Vorrichtungsankündigungsnachrichten zu dem Netzwerk mit Multicasting senden, besagte Vorrichtungsankündigungsnachricht zumindest eine Netzwerkadressierungsidentifikation der Vorrichtung, eine Vorrichtungsbeschreibungsinformation und eine Serviceinformation, die von der Vorrichtung getragen wird, enthält.

3. Verfahren für eine dynamische Vernetzung zwischen einer Vielzahl von Vorrichtungen gemäß Anspruch 1, wobei in besagtem Schritt B1 eine Vorrichtung, die als Knotenkontrollvorrichtung dient, durch einen Nutzer oder dynamisch generiert bestimmt werden kann.

4. Verfahren für eine dynamische Vernetzung zwischen einer Vielzahl von Vorrichtungen gemäß Anspruch 1, wobei in besagtem Schritt B1 die Knotenankündigungsnachricht der Knotenkontrollvorrichtung zumindest eine Netzwerkadressierungsinformation der Knotenkontrollvorrichtung, den Typ des Knotens und einen Knotenidentifizierer des Knotens beinhaltet.

5. Verfahren für eine dynamische Vernetzung zwischen einer Vielzahl von Vorrichtungen gemäß Anspruch 1, wobei in besagtem Schritt B1 eine Lebenszeit des Knotens in dem Netzwerk dieselbe ist, wie die Dauer von der Erschaffung und dem Entfernen des Knotens, wobei wenn die Knotenkontrollvorrichtung einen erstellten Knoten löscht, sie eine Knotenbeendigungsnachricht an alle Vorrichtungen in dem Knoten sendet.

6. Verfahren für eine dynamische Vernetzung zwischen einer Vielzahl von Vorrichtungen gemäß Anspruch 1, wobei besagter Schritt C1 weiterhin einen Schritt einer Vorrichtung aufweist, welche den Knoten beendet, wobei der Schritt die Serviceinformation, die durch die Vorrichtung bereitgestellt wird, von der Knotenkontrollvorrichtung des Knotens löscht.

7. Verfahren für eine dynamische Vernetzung zwischen einer Vielzahl von Vorrichtungen gemäß Anspruch 1, wobei die Indizierung in besagtem Schritt D1 ausgeführt wird, indem existierende Knoten in dem Netzwerk in einem aktiven Modus mittels der Vorrichtung nachgeschlagen werden, wobei sich besagter aktiver Modus darauf bezieht, dass die Vorrichtung eine Knotennachschlagenachricht, welche Nachschlagekriterien enthält, zu dem Netzwerk mit Multicasting sendet, und wobei die Knotenkontrollvorrichtung, die das Nachlagekriterium erfüllt, die Knotenankündigungsnachricht zu der Vorrichtung, welche das Nachschlagen mit Unicasting durchführt, sendet.

8. Verfahren für eine dynamische Vernetzung zwischen einer Vielzahl von Vorrichtungen gemäß Anspruch 1, wobei die Indizierung in besagtem Schritt D1 durchgeführt wird, durch Nachschlagen in dem Netzwerk existierender Knoten in einem passiven Modus mittels der Vorrichtung, wobei besagter passiver Modus sich darauf bezieht, dass die Vorrichtung eine designierte Multicastingadresse überwacht, um die Nachricht des Knotens in derselben Broadcasting-Domäne oder einer verschiedenen Broadcasting-Domäne zu erhalten.

9. Verfahren für eine dynamische Vernetzung zwischen einer Vielzahl von Vorrichtungen gemäß Anspruch 1, weiterhin aufweisend ein Kommunikationsverfahren zwischen den Knoten, aufweisend die folgenden Schritte:
E1. eine Quellknotenkontrollvorrichtung und eine Zielknotenkontrollvorrichtung senden jeweils entsprechende Knotenankündigungsnachrichten ihrer eigenen Knoten zu dem Netzwerk;
F1. die Quellknotenkontrollvorrichtung und die Zielknotenkontrollvorrichtung etablieren eine Betriebsmittelteilung zwischen den beiden Knoten, und tauschen Betriebsmittelinformationen aus, indem sie jeweils Prozeduren von Initiierungsanfragen und Empfangsanfragen verwenden;
G1. die Vorrichtung im Quellknoten sendet eine Anfrage, welche mittels der Zielknotenkontrollvorrichtung übermittelt wird, zu ihrer Knotenkontrollvorrichtung, um für die Ressourcen einer Vorrichtung im Zielknoten anzufragen;
H1 die Vorrichtung im Zielknoten sendet eine Ressourcenanfrageantwort zurück, welche übermittelt wird mittels der Quellknotenkontrollvorrichtung, zu der Vorrichtung im Quellknoten.

## Revendications

1. Un procédé de mise en réseau dynamique entre une pluralité de dispositifs dans un réseau informatique, comprenant les étapes suivantes :
A1. installation d'un ensemble modulaire de partage de ressources et de mise en réseau dynamique sur chaque dispositif de la pluralité de dispositifs qui a besoin d'effectuer un partage de ressources et une mise en réseau dynamique, ledit ensemble modulaire comprenant :
un module de couche d'émission réseau pour émettre et recevoir des données ;
un module de couche de gestion de dispositif pour contrôler et gérer la connexion entre la pluralité de dispositifs ;
un module de couche de gestion de service pour effectuer une gestion des services pour le dispositif proprement dit et un noeud, le noeud étant une combinaison d'une pluralité de dispositifs et ces dispositifs envoyant périodiquement des messages d'annonce de dispositif par multicast ;
B1. un dispositif parmi la pluralité de dispositifs sert de dispositif de contrôle de noeud du noeud et envoie un message d'annonce de noeud pour annoncer l'existence du dispositif de contrôle de noeud par multicast ;
C1, qui est l'un d'entre :
C1a. un dispositif trouve le noeud en surveillant un message d'annonce de noeud, et un dispositif qui demande à se joindre au noeud enregistre ses informations de service qui peuvent être fournies au dispositif de contrôle de noeud du noeud ; ou
C1b. le dispositif de contrôle de noeud configure d'autres dispositifs sur le réseau de sorte que ces dispositifs doivent enregistrer auprès du dispositif de contrôle de noeud leurs informations de service qui peuvent être délivrées et se joindre au noeud ; et
D1. le dispositif qui s'est joint au noeud trouve un autre dispositif qui assure un service souhaité par indexation du dispositif de contrôle de noeud, et obtient le service souhaité à partir de l'autre dispositif par envoi d'un message d'appel de service à l'autre dispositif, où
le dispositif de contrôle de noeud est désigné dynamiquement ; et où
ledit noeud comprend un noeud global et un noeud spécifique dans un domaine de *broadcast,* des entités de service sur tous les dispositifs du même domaine de *broadcast* appartiennent par défaut au même noeud global, et une entité de service sur l'un quelconque des dispositifs peut créer un noeud spécifique autre que le noeud global, et un dispositif n'est actif que dans un noeud spécifique à la fois.

2. Le procédé de mise en réseau dynamique entre une pluralité de dispositifs selon la revendication 1, dans lequel, à ladite étape A1, le dispositif envoie périodiquement des messages d'annonce de service au réseau avec *multicast*, ledit message d'annonce de dispositif comprenant au moins une identification d'adressage réseau du dispositif, une information de description du dispositif, et une information de service véhiculée par le dispositif.

3. Le procédé de la revendication 1, dans lequel, à ladite étape B1, un dispositif servant en tant que dispositif de contrôle de noeud peut être désigné par un utilisateur ou être généré dynamiquement.

4. Le procédé de mise en réseau dynamique entre une pluralité de dispositifs selon la revendication 1, dans lequel, à ladite étape B1, le message d'annonce de noeud du dispositif de contrôle de noeud comprend au moins une identification d'adressage réseau du dispositif de contrôle de noeud, le type de noeud et un identifiant de noeud du noeud.

5. Le procédé de mise en réseau dynamique entre une pluralité de dispositifs selon la revendication 1, dans lequel, à ladite étape B₁, une durée de vie du noeud dans le réseau est la même que la durée de la création et du retrait du noeud ; lorsque le dispositif de contrôle de noeud annule un noeud créé, il envoie une notification d'abandon de noeud à tous les dispositifs du noeud.

6. Le procédé de mise en réseau dynamique entre une pluralité de dispositifs selon la revendication 1, dans lequel ladite étape C1 comprend en outre une étape où un dispositif qui abandonne le noeud annule les informations de service qui peuvent être fournies par le dispositif depuis le dispositif de contrôle de noeud du noeud.

7. Le procédé de mise en réseau dynamique entre une pluralité de dispositifs selon la revendication 1, dans lequel l'indexation à ladite étape D1 est effectuée par recherche des noeuds existants dans le réseau dans un mode actif par le dispositif, ledit mode actif se réfère à ce que le dispositif envoie un message de recherche de noeud, qui contient des critères de recherche, au réseau par *multicast*, et le dispositif de contrôle de noeud vérifiant les critères de recherche envoie le message d'annonce de noeud au dispositif qui effectue la recherche par *unicast.*

8. Le procédé de mise en réseau dynamique entre une pluralité de dispositifs selon la revendication 1, dans lequel l'indexation à ladite étape D1 est effectuée par recherche des noeuds existants dans le réseau en un mode passif par le dispositif, ledit mode passif se réfère à ce que le dispositif surveille une adresse multicast désignée pour obtenir le message du noeud dans le même domaine de *broadcast* ou un domaine de *broadcast* différent.

9. Le procédé de mise en réseau dynamique entre une pluralité de dispositifs selon la revendication 1, comprenant en outre un procédé de communication entre noeuds, incluant les étapes suivantes :
E1. un dispositif de contrôle de noeud source et un dispositif de contrôle de noeud destinataire envoient respectivement des messages d'annonce de noeuds respectifs de leurs propres noeuds au réseau ;
F1. le dispositif de contrôle de noeud source et le dispositif de contrôle de noeud destinataire établissent un partage des ressources entre les deux noeuds, et échangent des informations de ressource en utilisant des procédures d'initiation de requête et de réception de requête respectivement ;
G1. le dispositif au sein du noeud source envoie une requête, qui est transférée par le dispositif de contrôle du noeud destinataire, à son dispositif de contrôle de noeud pour appeler la ressource d'un dispositif au sein du noeud destinataire ;
H1. le dispositif au sein du noeud destinataire renvoie une réponse d'appel de ressource, qui est transférée par le dispositif de contrôle du noeud source au dispositif au sein du noeud source.
